(19) Europäisches Patentamt
European Patent Office
Office européen des brevets

(11) **EP 1 956 701 B1**

(12) **EUROPÄISCHE PATENTSCHRIFT**

(45) Veröffentlichungstag und Bekanntmachung des Hinweises auf die Patenterteilung:
**28.03.2012 Patentblatt 2012/13**

(51) Int Cl.:
*H02M 3/157* *(2006.01)*    *H02M 1/42* *(2007.01)*

(21) Anmeldenummer: **07002759.4**

(22) Anmeldetag: **08.02.2007**

(54) **DC/DC-Schaltwandler mit einem ein Bandpassfilter und ein Bandsperrfilter aufweisenden Spannungsregelkreis**

DC/DC-converter with a band pass filter and a band rejection filter in the voltage control loop

Convertisseur continu-continu avec un filtre passe-bande et un filtre coupe-bande dans la boucle d'asservissement en tension

(84) Benannte Vertragsstaaten:
**DE FR GB IT**

(43) Veröffentlichungstag der Anmeldung:
**13.08.2008 Patentblatt 2008/33**

(73) Patentinhaber: **Infineon Technologies Austria AG**
**9500 Villach (AT)**

(72) Erfinder:
• **Feldtkeller, Martin**
  **81543 München (DE)**
• **Fery, Antoine**
  **81549 München (DE)**

(74) Vertreter: **Bickel, Michael**
**Westphal, Mussgnug & Partner**
**Patentanwälte**
**Herzog-Wilhelm-Strasse 26**
**80331 München (DE)**

(56) Entgegenhaltungen:
**DE-A1- 2 158 105    DE-A1- 3 722 328**

• **ALEKSANDAR PRODIC ET AL: "Self-Tuning Digitally Controlled Low-Harmonic Rectifier Having Fast Dynamic Response" IEEE TRANSACTIONS ON POWER ELECTRONICS, IEEE SERVICE CENTER, PISCATAWAY, NJ, US, Bd. 18, Nr. 1, Januar 2003 (2003-01), Seiten 420-428, XP011078291 ISSN: 0885-8993**

**Beschreibung**

Die vorliegende Erfindung betrifft einen Schaltwandler, insbesondere einen als Leistungsfaktorkorrekturschaltung (Power Factor Controller, PFC) ausgebildeten Schaltwandler.

Eine Leistungsfaktorkorrekturschaltung ist üblicherweise als Hochsetzsteller ausgebildet und umfasst ein induktives Speicherelement, eine an das induktive Speicherelement angeschlossene Gleichrichteranordnung zur Bereitstellung einer Ausgangsspannung und eine an das induktive Speicherelement angeschlossene Schaltanordnung. Die Schaltanordnung regelt die Stromaufnahme des induktiven Speicherelements abhängig von der Ausgangsspannung und ist so verschaltet, dass das Speicherelement periodisch Energie über Eingangsklemmen aufnimmt und dadurch magnetisiert wird, und die aufgenommene Energie anschließend an die Gleichrichteranordnung abgibt und dadurch entmagnetisiert wird.

Zur Regelung der Leistungsaufnahme, und damit der Ausgangsspannung, wird bei einem solchen Power Factor Controller ein Regelsignal erzeugt, das abhängig von der Ausgangsspannung ist und das insbesondere die Zeitdauern der Magnetisierungsphasen des induktiven Speicherelements bestimmt. Derartige Power Factor Controller sind beispielsweise beschrieben in der DE 103 55 670 B4 (Feldtkeller) oder der DE 10 2004 033 354 A1 (Frank et al.).

Weitere Power Factor Controller sind beschrieben in der US 5,502,370, der US 5,565,761 oder der US 6,140,777.

Die Eingangsspannung eines Power Factor Controllers ist üblicherweise eine gleichgerichtete Netzspannung und besitzt damit einen sinusbetragförmigen Spannungsverlauf. Die Regelung der Stromaufnahme soll bei einem Power Factor Controller idealerweise so erfolgen, dass ein Mittelwert eines Eingangsstromes proportional ist zu der anliegenden Eingangsspannung. Die Leistungsaufnahme ist dann proportional zum Quadrat der Eingangsspannung und besitzt einen sinusförmigen Verlauf mit einer Frequenz, die der doppelten Netzfrequenz entspricht. Diese zeitlich variierende Leistungsaufnahme führt zu einer Welligkeit der am Ausgang der Gleichrichteranordnung zur Verfügung stehenden Ausgangsspannung, die um so größer ist, je kleiner ein Ausgangskondensator der Gleichrichteranordnung aus Kostengründen dimensioniert wird.

Um zu vermeiden, dass eine solche Welligkeit der Ausgangsspannung die Regelung der Strom- bzw. Leistungsaufnahme beeinflusst, ist es bekannt, in dem Regelkreis ein Bandsperrfilter (Notchfilter) vorzusehen, das Signalanteile mit der doppelten Netzfrequenz ausfiltert. Berücksichtigt man, dass sich die Netzfrequenzen weltweit unterscheiden, so muss der Bandsperrbereich des Filters entsprechend breit gewählt werden, um beispielsweise die 100Hz-Welligkeit eines 50Hz-Netzes und die 120Hz-Welligkeit eines 60Hz-Netzes sicher auszufiltern. Allerdings verschlechtern sich die Eigenschaften eines solchen Filters bezüglich Dämpfung und Gruppenlaufzeit mit zunehmender Breite der Bandsperre.

Bei digitalen Filtern ist darüber hinaus ein ausreichend genauer Takt zum Abtasten des zu filternden Signals erforderlich, da die Filtercharakteristik ansonsten den Toleranzen des Taktsignals unterliegt.

Die Welligkeit der Ausgangsspannung kann auch dadurch eliminiert werden, dass die Ausgangsspannung zum Zweck der Regelung der Leistungsaufnahme über ein gegebenes Zeitfenster gemittelt wird. Dies verlangsamt allerdings die Regelung und beeinträchtigt die Fähigkeit des Schaltwandlers, auf Lastsprünge am Ausgang rasch zu reagieren.

In Prodić et al.: "Self Tuning Digital Comb Filter for PFC Applications", 28th Annual Conference of the Industrial Electronics Society 2002 (IECON 02), ISBN: 0-7803-7474-6, Seiten 220-225, ist ein Power Factor Controller beschrieben, bei dem eine Filtercharakteristik eines Bandsperrfilters, das in einem Spannungsregelkreis angeordnet ist, umschaltbar ist, um Welligkeiten, mit 100Hz oder mit 120Hz zu unterdrücken. Ein entsprechender Power Factor Controller ist beschrieben in Prodić et al.: "Self-Tuning Digitally Controlled Low-Harminic Rectifier Having Fast Dynamic Response" IEEE Transactions on Power Electronics.

Die DE 21 58 105 A1 beschreibt eine Schaltungsanordnung zur Frequenzmessung, bei der die Periodendauer eines zu messenden Signals mit der Periodendauer eines eine Normalfrequenz aufweisenden Signals verglichen wird.

Aufgabe der vorliegenden Erfindung ist es, einen Schaltwandler, insbesondere einen als Leistungsfaktorkorrekturschaltung ausgebildeten Schaltwandler zur Verfügung zu stellen, der aus einer Eingangsspannung eine geregelte Ausgangsspannung für eine Last erzeugt, der auf Lastsprünge der Last rasch reagieren kann und bei dem ein Einfluss einer aus der Eingangsspannung resultierenden Welligkeit der Ausgangsspannung auf die Regelung der Ausgangsspannung reduziert ist.

Diese Aufgabe wird durch einen Schaltwandler nach Anspruch 1 gelöst. Ausgestaltungen der Erfindung sind Gegenstand der Unteransprüche.

Ein Schaltwandler gemäß einem Ausführungsbeispiel der Erfindung umfasst ein induktives Energiespeicherelement, eine an das induktive Energiespeicherelement angeschlossene Gleichrichteranordnung mit Ausgangsklemmen zur Bereitstellung einer Ausgangsspannung, eine Schaltanordnung zur Regelung einer Stromaufnahme des induktiven Energiespeicherelements abhängig von einem Regelsignal und eine Regleranordnung, die dazu aus gebildet ist, das Regelsignal abhängig von der Ausgangsspannung zu erzeugen. Die Regleranordnung umfasst ein diskretes Bandsperrfilter, dem ein von der Ausgangsspannung abhängiges, nach Maßgabe eines Taktsignals abgetastetes Fehlersignal und das Taktsignal zugeführt sind und das ein erstes Filtersignal erzeugt, von dem das Regelsignal abhängig ist, eine Frequenzmessanordnung, der das Fehlersignal zugeführt ist und die dazu ausgebildet ist, eine Frequenz eines periodischen Signalanteils des Fehlersignals zu ermitteln und ein von dieser Frequenz abhängiges Taktsteuersignal zu erzeugen, und einen steuerbaren Oszillator, dem das Taktsteuersignal zugeführt ist und der das Taktsignal abhängig von dem Taktsteuersignal erzeugt.

Die Frequenzmessanordnung ermöglicht bei diesem Schaltwandler eine adaptive Anpassung der Abtastfrequenz an die nachfolgend als Brummfrequenz bezeichnete Frequenz eines periodischen Signalanteils des Fehlersignals. Hierdurch kann die Brummfrequenz in den Bandsperrbereich des Bandsperrfilters verschoben werden, so dass ein Filter mit einem schmalen Sperrbereich verwendet werden kann.

Ausführungsbeispiele der vorliegenden Erfindung werden nachfolgend anhand von Figuren erläutert. In diesem Zusammenhang sei darauf hingewiesen, dass in den Figuren lediglich die zum Verständnis der Erfindung erforderlichen Schaltungskomponenten dargestellt sind.

Figur 1     zeigt ein Ausführungsbeispiel eines erfindungsgemäßen Schaltwandlers, der als Hochsetzsteller ausgebildet ist und der einen Rückkopplungszweig mit einer adaptiv einstellbaren, ein Bandsperrfilter aufweisenden Filteranordnung aufweist.

Figur 2     veranschaulicht die Funktionsweise eines nichtlückend betriebenen Hochsetzstellers.

Figur 3     veranschaulicht die Funktionsweise eines lückend betriebenen Hochsetzstellers.

Figur 4     zeigt ein Realisierungsbeispiel der adaptiven Filteranordnung.

Figur 5     veranschaulicht Frequenzgänge eines bandpassgefilterten Fehlersignals sowie einer Übertragungsfunktion des Bandsperrfilters zur Erläuterung der Funktionsweise der adaptiven Filteranordnung.

Figur 6     veranschaulicht die Funktionsweise einer in der Frequenzmessanordnung vorhandenen Auswerteschaltung anhand von Signalverläufen.

Figur 7     zeigt ein Ausführungsbeispiel der Auswerteschaltung.

Figur 8     zeigt ausschnittsweise eine Abwandlung der Auswerteschaltung gemäß Figur 7.

Figur 9     zeigt ein Realisierungsbeispiel für ein Bandsperrfilter und ein Bandpassfilter der Filteranordnung.

In den Figuren bezeichnen, sofern nicht anders angegeben, gleiche Bezugszeichen gleiche Schaltungskomponenten und Signale mit gleicher Bedeutung.

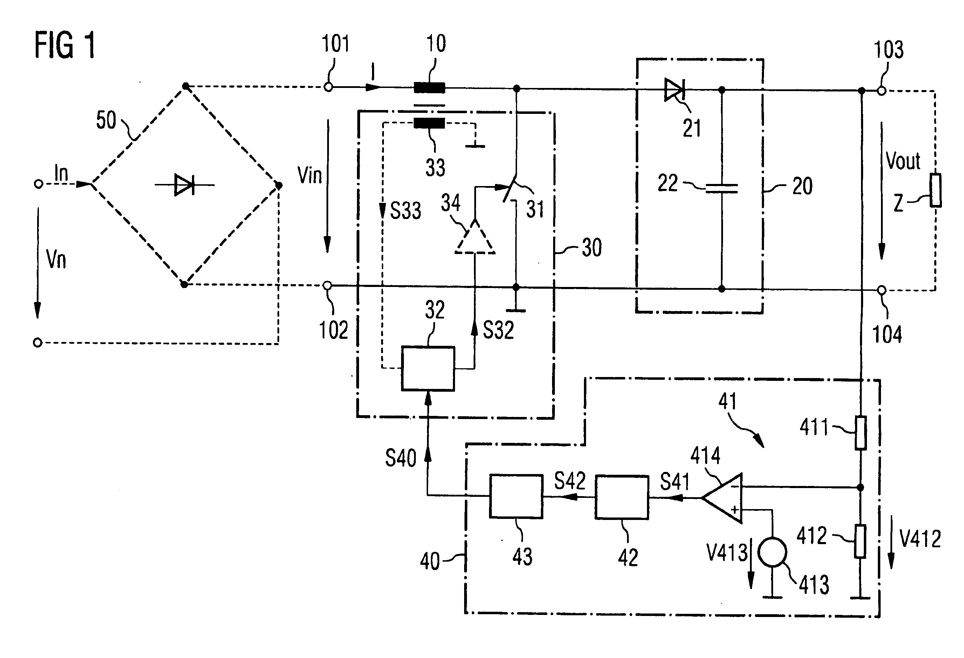

Figur 1 zeigt ein Ausführungsbeispiel eines erfindungsgemäßen Schaltwandlers. Der dargestellte Schaltwandler ist als Hochsetzsteller ausgebildet und weist Eingangsklemmen 101, 102 zum Anlegen einer Eingangsspannung Vin, ein induktives Speicherelement 10 und eine an das induktive Speicherelement 10 angeschlossene Gleichrichteranordnung 20 auf. Das induktive Speicherelement 10 und die Gleichrichteranordnung 20 sind hierbei in Reihe zueinander zwischen die Eingangsklemmen 101, 102 geschaltet. Die Gleichrichteranordnung 20 weist in dem dargestellten Beispiel eine Reihenschaltung mit einem Gleichrichterelement 21, beispielsweise einer Diode, und einem kapazitiven Speicherelement 22, beispielsweise einem Kondensator, auf. Eine Ausgangsspannung Vout des Schaltwandlers zur Versorgung einer Last Z (gestrichelt dargestellt) ist an Ausgangsklemmen 103, 104 der Gleichrichteranordnung 20 abgreifbar. Diese Ausgangsspannung Vout entspricht in dem dargestellten Beispiel einer Spannung über dem kapazitiven Speicherelement 22 der Gleichrichteranordnung 20.

Zur Regelung einer Stromaufnahme des induktiven Speicherelements 10, somit zur Regelung der Leistungsaufnahme über die Eingangsklemmen 101, 102 und somit zur Regelung der Ausgangsspannung Vout des Schaltwandlers ist eine Schaltanordnung 30 vorhanden, die dazu ausgebildet ist, das induktive Speicherelement 10, das beispielsweise als Speicherdrossel realisiert ist, periodisch jeweils während einer Magnetisierungsdauer zu magnetisieren und anschließend für eine Entmagnetisierungsdauer zu entmagnetisieren. Die Schaltanordnung 30 weist hierzu ein Schaltelement 31 auf, das in Reihe zu dem induktiven Speicherelement 10 zwischen die Eingangsklemmen 101, 102 und das parallel zu der Gleichrichteranordnung 20 geschaltet ist. Bei leitend angesteuertem bzw. geschlossenem Schaltelement 31 liegt die Eingangsspannung Vin über dem induktiven Speicherelement 10 an, das induktive Speicherelement nimmt dabei Energie über die Eingangsklemmen 101, 102 auf und wird dadurch magnetisiert. Bei anschließend sperrend angesteuertem bzw. geöffnetem Schaltelement 31 gibt das induktive Speicherelement 10 die zuvor aufgenommene Energie an die Gleichrichteranordnung 20 ab und wird dadurch entmagnetisiert.

Zur Ansteuerung des Schaltelements 31 weist die Schaltanordnung 30 eine Ansteuerschaltung 32 auf, die ein Ansteuersignal S32 erzeugt, nach dessen Maßgabe das Schaltelement 31 leitend und sperrend angesteuert ist. Das Schaltelement 31 kann insbesondere als MOS-Transistor, beispielsweise als MOSFET oder IGBT realisiert sein. Eine Laststrecke bzw. Drain-Source-Strecke eines solchen MOS-Transistors ist hierbei in Reihe zu dem induktiven Speicherelement 10 geschaltet, einem Steueranschluss bzw. Gate-Anschluss dieses MOS-Transistors ist das Ansteuersignal S32 zu leitenden und sperrenden Ansteuerung zugeführt. Optional kann dem Steueranschluss des Schaltelements 31 eine Treiberschaltung 34 vorgeschaltet sein, die dazu dient, Signalpegel des Ansteuersignals S32 auf zur Ansteuerung des Schaltelements geeignete Signalpegel umzusetzen.

Die Ansteuerschaltung 32 steuert das Schaltelement 31 periodisch an, wobei das Schaltelement 31 während jeder Ansteuerperiode für eine Magnetisierungsdauer leitend und anschließend für eine Entmagnetisierungsdauer sperrend angesteuert wird. Die Entmagnetisierungsdauer bezeichnet hierbei die Zeitdauer zwischen einer sperrenden Ansteuerung des Schaltelements 31 und einer vollständigen Entmagnetisierung des induktiven Speicherelements 10. Ein der Ansteuerschaltung 32 zugeführtes Regelsignal S40 bestimmt bei diesem Schaltwandler die Einschaltdauer des Schalters bzw. die Magnetisierungsdauer während jeder Ansteuerperiode, und damit die Leistungsaufnahme des Schaltwandlers. Die Ansteuerschaltung 32 kann eine herkömmliche Ansteuerschaltung für einen Schalter in einem Hochsetzsteller sein, so dass auf weitere Ausführungen zur Realisierung einer solchen Ansteuerschaltung verzichtet werden kann.

Die Ansteuerschaltung 32 kann insbesondere dazu ausgebildet sein, den Hochsetzsteller im Dreieckstrombetrieb, der auch als Betrieb mit diskontinuierlicher Stromaufnahme (Discontinuous Conduction Mode, DCM) bezeichnet wird, oder im Trapezstrombetrieb (Continuous Conduction Mode), der auch als Betrieb mit kontinuierlicher Stromaufnahme bezeichnet wird zu betreiben.

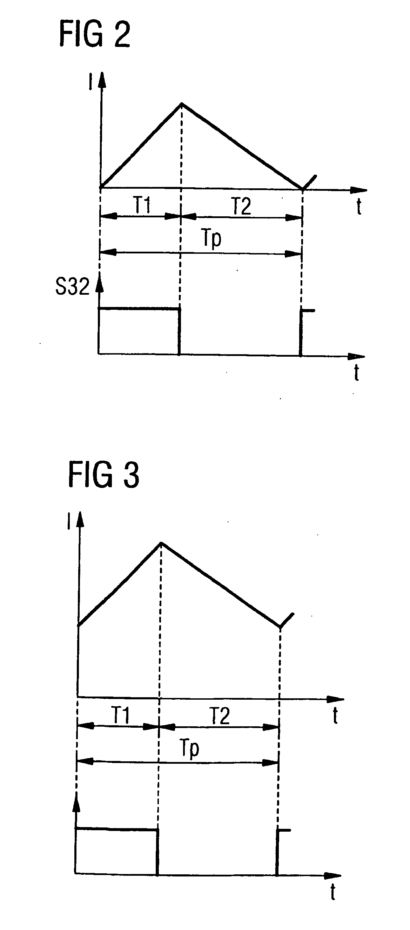

Figur 2 zeigt einen zeitlichen Verlauf eines Stroms I in die Speicherdrossel 10 und des Ansteuersignals S32 während einer Ansteuerperiode bei Dreieckstrombetrieb. Zu Zwecken der Erläuterung wird für die Darstellung in Figur 2 davon ausgegangen, dass das Schaltelement 31 bei einem High-Pegel des Ansteuersignals S32 leitet und bei einem Low-Pegel dieses Ansteuersignals sperrt.

Bezugnehmend auf Figur 2 umfasst jede Ansteuerperiode Tp eine Magnetisierungsdauer T1, die der Einschaltdauer des Schaltelements 31 entspricht, und eine sich an die Magnetisierungsdauer T1 anschließende Entmagnetisierungsdauer, während der die Drossel vollständig entmagnetisiert wird und die der Ausschaltdauer des Schaltelements 31 entspricht. Das Schaltelement 31 wird hierbei am Ende der Entmagnetisierungsdauer, also dann wenn die Speicherdrossel 10 stromlos bzw. entmagnetisiert ist, erneut eingeschaltet. Für den Dreieckstrombetrieb ist eine Information über den Magnetisierungszustand erforderlich, den die Ansteuerschaltung 32 beispielsweise von einer Hilfsspule erhält, die induktiv mit der Speicherdrossel gekoppelt ist. Eine Spannung S33 über dieser Hilfsspule enthält eine Information über den momentanen Magnetisierungszustand der Speicherdrossel 10 und damit über Zeitpunkte, zu denen die Drossel 10 jeweils vollständig entmagnetisiert ist.

Im Trapezstrombetrieb, für den die Signalverläufe in Figur 3 dargestellt sind, wird das Schaltelement 31 während der Entmagnetisierungsphase wieder eingeschaltet, noch bevor die Speicherdrossel vollständig entmagnetisiert ist. Für Momentanwerte der Eingangsspannung Vin ungleich Null, sinkt der Eingangsstrom bei dieser Art der Ansteuerung - im Gegensatz zum Dreieckstrombetrieb - nicht auf Null ab. Der Stromverlauf entspricht hierbei qualitativ dem Stromverlauf in Figur 2 mit dem Unterschied, dass der Strom zu Beginn der Magnetisierungsdauer nicht von Null anzusteigen beginnt und während der Entmagnetisierungsdauer nicht auf Null absinkt.

Bei beiden zuvor erläuterten Betriebsarten ist eine momentan aufgenommene Leistung P proportional zum Quadrat der Eingangsspannung, es gilt also:

$$P \sim Vin^2 \qquad (1).$$

Der in Figur 1 dargestellte Hochsetzsteller wird als Leistungsfaktor-Korrekturschaltung (Power Factor Controller, PFC) betrieben. Ein solcher Power Factor Controller ist ein Hochsetzsteller, dem eine periodisch variierende Spannung als Eingangsspannung Vin zugeführt ist und der eine Gleichspannung als Ausgangsspannung Vout erzeugt. Die Eingangsspannung Vin ist hierbei beispielsweise ein sinusbetragförmige Spannung, die beispielsweise mittels eines Brückengleichrichters 50 aus einer sinusförmigen Netzspannung Vn erzeugt wird.

Zur Minimierung der Blindleistung zur Aufnahme aus dem Netz ist bei solchen Power Factor Controllern gefordert, dass der Eingangsstrom, bzw. ein Mittelwert des Eingangsstroms, wenigstens annäherungsweise proportional ist zu der Eingangsspannung Vin. Im Dreieckstrombetrieb ist dies gewährleistet, wenn die Magnetisierungsdauer für aufeinanderfolgende Ansteuerperioden gleich ist und sich nur langsam im Vergleich zur Periodendauer der Netzspannung ändert. Die Einstellung der Magnetisierungsdauer T1 erfolgt durch die Ansteuerschaltung 32 hierbei abhängig von dem Regelsignal S40. Die Magnetisierungsdauer T1 ist bei einem Hochsetzsteller der Parameter zur Einstellung der Leistungsaufnahme und damit zur Regelung der Ausgangsspannung Vout. Sinkt die Ausgangsspannung bedingt durch eine erhöhte Leistungsaufnahme der Last, so wird über das Regelsignal S40 die Einschaltdauer bzw. Magnetisierungsdauer vergrößert, um die Leistungsaufnahme zu erhöhen und dadurch einem Absinken der Ausgangsspannung entgegenzuwirken.

Die Bedingung, dass der Eingangsstrom wenigstens annähernd proportional zu der Eingangsspannung sein soll, ist bei einem lückend betriebenen Schaltwandler gewährleistet, wenn die Magnetisierungsdauer für eine Anzahl aufeinanderfolgender Ansteuerperioden konstant ist und sich nur langsam im Vergleich zur Periodendauer der Netzspannung Vn ändert, und wenn der Proportionalitätsfaktor p ebenfalls für eine Anzahl aufeinanderfolgender Ansteuerperioden konstant ist bzw. sich nur langsam im Vergleich zu der Netzspannung Vn ändert. In einem lückend betriebenen Schaltwandler sind die Magnetisierungsdauer T1 und der Proportionalitätsfaktor p Parameter zur Änderung der Leistungsaufnahme und damit zur Regelung der Ausgangsspannung. Steigt beispielsweise die Ausgangsspannung in Folge einer verringerten Leistungsaufnahme der Last Z, so wird beispielsweise die Magnetisierungsdauer verkleinert und/oder die Wartezeit verlängert, um dadurch die Leistungsaufnahme zu verringern und einem Anstieg der Ausgangsspannung entgegenzuwirken. Bei lückendem Betrieb stellt die Ansteuerschaltung 32 die Magnetisierungsdauer T1 und den Proportionalitätsfaktor abhängig von dem Regelsignal S40 ein, wobei der Proportionalitätsfaktor sich mit änderndem Regelsignal beispielsweise stufenweise ändert, während die Magnetisierungsdauer sich stetig ändert.

Bezug nehmend auf die Gleichung (1) ist die Leistungsaufnahme proportional zum Quadrat der Eingangsspannung Vin. Bei einer sinusförmigen Netzspannung verläuft die Leistungsaufnahme damit sinusförmig mit einer Frequenz, die der doppelten Netzfrequenz entspricht. Diese periodischen Schwankungen der Leistungsaufnahme werden durch die Gleichrichteranordnung 20 ausgeglichen, um am Ausgang 103, 104 eine Gleichspannung als Ausgangsspannung Vout zur Verfügung zu stellen. Abhängig vom Kapazitätswert des Ausgangskondensators 22 ist dieser Gleichspannung Vout jedoch ein periodisches Signal mit der doppelten Netzfrequenz überlagert. Dieses Signal wird nachfolgend als Brummsignal bezeichnet, dessen Frequenz als Brummfrequenz.

Zur Erzeugung des die Leistungsaufnahme regelnden Regelsignals S40 weist der Schaltwandler eine Regleranordnung 40 auf, der die Ausgangsspannung Vout zugeführt ist. Diese Regleranordnung 40 umfasst in dem dargestellten Beispiel einen Fehlerverstärker 414, der ein Fehlersignal bzw. Differenzsignal S41 erzeugt. Dieses Fehlersignal S41 ist ein Maß für eine momentane Abweichung der Ausgangsspannung Vout von einem Sollwert. Zur Erzeugung des Fehlersignals S41 ist dem Fehlerverstärker 414 eine durch einen Spannungsteiler 411, 412 heruntergeteilte Ausgangsspannung V412 und ein durch eine Referenzspannungsquelle 413 bereitgestelltes Referenzsignal V413, das den Sollwert repräsentiert, zugeführt. Das Fehlersignal S41 entspricht bei dem dargestellten Schaltwandler einer Differenz zwischen der Referenzspannung V413 und der heruntergeteilten Ausgangsspannung V412 und ist entsprechend der Ausgangsspannung Vout mit einem Brummsignal behaftet. Dieses Fehlersignal S41 ist einer Filteranordnung 42 mit einem Bandsperrfilter zugeführt, die dazu ausgebildet ist, das Brummsignal auszufiltern und ein gefiltertes Fehlersignal S42 an ihrem Ausgang zur Verfügung zu stellen. Das gefilterte, idealerweise kein Brummsignal mehr aufweisende, Fehlersignal S42 ist einem Regler 43 zugeführt, der das Regelsignal S40 aus dem gefilterten Fehlersignal S42 erzeugt. Dieser Regler 43 kann ein Proportionalverhalten besitzen, das Regelsignal S40 also abhängig von dem Momentanwert des gefilterten Fehlersignals S42 erzeugen, kann ein Integralverhalten besitzen, das Regelsignal S40 also abhängig von dem gefilterten Fehlersignal S42 betrachtet über ein vorgegebenes Zeitfensters in der Vergangenheit erzeugen, oder kann ein Proportional-IntegralVerhalten besitzen.

Die Filteranordnung 42 besitzt ein Filterverhalten, das adaptiv an die Brummfrequenz des dem Fehlersignal S41 überlagerten Brummsignals angepasst werden kann, um bei einer möglichst schmalen Bandsperre des in der Filteranordnung enthaltenen Bandsperrfilters das Brummsignal optimal auszufiltern.

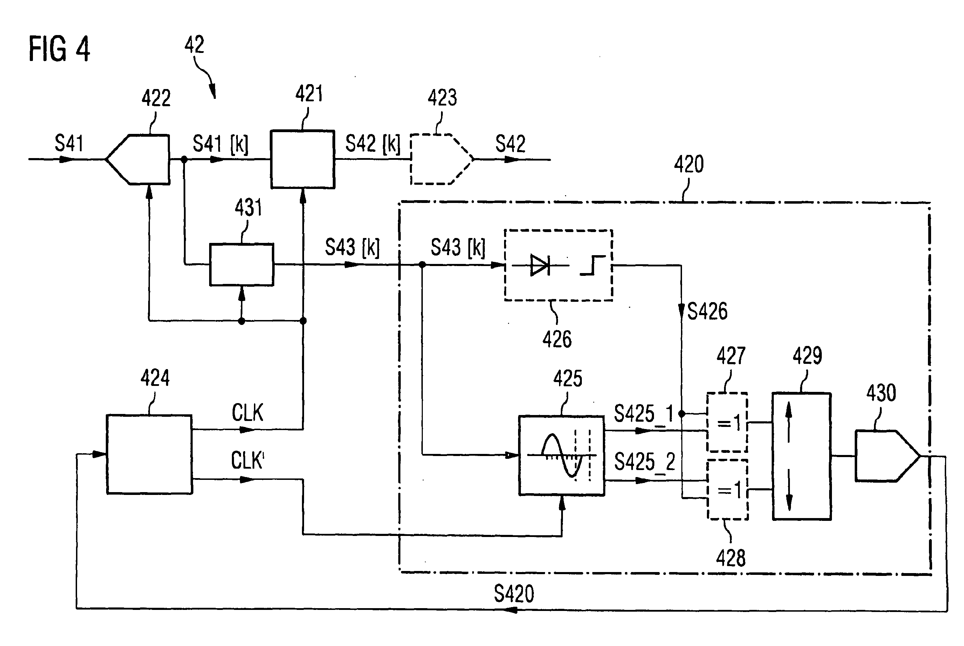

Ein Ausführungsbeispiel einer solchen adaptiven Filteranordnung ist in Figur 4 dargestellt. Diese Filteranordnung weist einen Analog-Digital-Wandler 422 auf, dem das Fehlersignal S41 zugeführt ist und der das Fehlersignal S41 im Takt eines Taktsignals CLK abtastet. Am Ausgang des Wandlers 422 steht eine Signalfolge zur Verfügung, die Abtastwerten des Fehlersignals S41 entspricht, und die nachfolgend als zeitdiskretes Fehlersignal S41[k] bezeichnet wird. Dieses zeitdiskrete Fehlersignal S41[k] ist einem Bandsperrfilter 421 zugeführt, das das abgetastete Fehlersignal S41[k] filtert und ein erstes Filtersignal S42[k] zur Verfügung stellt, das nachfolgend auch als bandsperrgefiltertes Fehlersignal bezeichnet ist. Das Bandsperrfilter 421 ist dazu ausgebildet, einen periodischen Signalanteil aus dem abgetasteten Fehlersignal S41[k] auszufiltern und kann sowohl als FIR-Filter (FIR = Finite Impulse Response) oder als IIR-Filter (IIR = Infinite Impulse Response) realisiert sein. Das bandsperrgefilterte Fehlersignal S42[k] kann unmittelbar als Ausgangssignal der Filteranordnung 42 ausgegeben werden, wenn der nachfolgende Regler 43 ebenfalls als zeitdiskreter Regler realisiert ist. Optional besteht die Möglichkeit, das bandsperrgefiltertes Fehlersignal S42[k] mittels eines Digital-Analog-Wandlers 422 in ein analoges Signal S42 zu wandeln und dieses am Ausgang der Filteranordnung 42 auszugeben.

Bei einer gegebenen Bandsperrcharakteristik des zeitdiskreten Bandsperrfilters 421 ist das Filterergebnis maßgeblich von der Abtastfrequenz abhängig. Die Frequenz der Signalanteile, die aus dem Fehlersignal S41 durch das Bandsperrfilter 421 ausgefiltert werden, um das bandsperrgefilterte Fehlersignal S42[k] zu erhalten, ist abhängig von der Frequenz, mit der das Fehlersignal S41 abgetastet wird. Um einerseits ein Bandsperrfilter mit einem schmalen Sperrbereich verwenden zu können, das Brummsignal andererseits jedoch optimal auszufiltern bzw. zu dämpfen, ist bei der Filteranordnung gemäß Figur 4 vorgesehen, die Frequenz des dem Fehlersignal S41 überlagerten Brummsignals durch eine Frequenzmessanordnung 420 zu erfassen und die Taktfrequenz des Taktsignals CLK abhängig von dem Messergebnis einzustellen.

Die Frequenzmessanordnung erzeugt hierzu ein Taktsteuersignal S420, das einem Oszillator 424 zugeführt ist. Dieser Oszillators, der beispielsweise als spannungsgesteuerter Oszillator realisiert ist, stellt das Taktsignal CLK mit einer von dem Taktsteuersignal S420 abhängigen Frequenz zur Verfügung.

Zur Erzeugung des Taktsteuersignals S420 kann der Frequenzmessanordnung 420 das abgetastete Fehlersignal S41[k] oder ein von dem abgetasteten Fehlersignal S41[k] abhängiges Signal zugeführt sein. Bei der dargestellten Anordnung ist optional ein Bandpassfilter 431 vorhanden, dem das Fehlersignal S41[k] zugeführt ist und an dessen Ausgang ein bandpassgefiltertes Fehlersignal S43[k] zur Verfügung steht, das der Frequenzmessanordnung 420 zugeführt ist. Die Filtercharakteristik eines zur Erzeugung des bandpassgefilterten Fehlersignals S43[k] verwendeten Bandpassfilters 431 ist komplementär zu der Filtercharakteristik des Bandsperrfilters, so dass das bandpassgefilterte Fehlersignal S43[k] den Signalanteil des Fehlersignals S41[k] repräsentiert, der durch das Bandsperrfilter ausgefiltert wird. Die Frequenzmessanordnung 420 weist eine Auswerteeinheit 425 auf, der das bandpassgefilterte Fehlersignal S43[k] zugeführt ist und die die Frequenz des bandpassgefilterten Fehlersignals S43[k] in Bezug auf die Taktfrequenz des Taktsignals CLK ermittelt. Der Auswerteeinheit 425 ist in dem Beispiel hierzu ein zweites Taktsignal CLK' zugeführt. Dieses zweite Taktsignal CLK' steht in einer festen Beziehung zu dem ersten Taktsignal CLK. Es kann insbesondere identisch mit dem ersten Taktsignal CLK sein oder kann hinsichtlich der Frequenz proportional zu dem ersten Taktsignal CLK sein. Das zweite Taktsignal CLK' kann außerdem in Phase zu dem ersten Taktsignal CLK oder phasenverschoben zu diesem ersten Taktsignal CLK sein.

Die Frequenzen der Taktsignale CLK, CLK' können geringer sein, als ein in dem spannungesteuerten Oszillator abhängig von dem Signal S420 erzeugter interner Takt. In dem Oszillator ist in diesem Fall ein Frequenzteiler (nicht dargestellt) integriert, der das intern erzeugte Taktsignal herunterteilt. Die Frequenz dieses internen Taktsignals kann hierbei im MHz-Bereich liegen, während die Frequenz der ersten und zweiten Taktsignale CLK, CLK' beispielsweise im einstelligen kHz-Bereich liegt.

Für die nachfolgende Erläuterung wird davon ausgegangen, dass das zeitdiskrete bandpassgefilterte Fehlersignal S43[k] dem abgetasteten Brummsignal entspricht. Dieses Signal S43[k] ist somit ein periodisches mittelwertfreies Signal mit einer der Brummfrequenz entsprechenden Frequenz. Selbst wenn davon ausgegangen wird, dass die Mitte des Durchlassbereiches des Bandpassfilters 431 bzw. des Sperrbereiches des Bandsperrfilters 421 während einer Adaptionsphase nicht exakt an die Brummfrequenz angepasst sind, so kann dennoch davon ausgegangen werden, dass zumindest zeitweise Signalanteile, die die Brummfrequenz aufweisen und die eine ausreichend hohe Amplitude besitzen, das Bandpassfilter 431 passieren.

Zur Ermittlung eines Verhältnisses zwischen der Brummfrequenz und der Taktfrequenz $f_{CLK}$ ermittelt die Auswerteschaltung 425 beispielsweise die Anzahl der Taktperioden des zweiten Taktsignals CLK' innerhalb einer vorgegebenen Anzahl von Perioden des abgetasteten Brummsignals S43[k]. Der Beginn bzw. das Ende einer Periode des Brummsignals wird durch die Ansteuerschaltung 425 beispielsweise dadurch erkannt, dass ein Wechsel der Polarität der Abtastwerte von negativen Werten zu positiven Werten vorliegt.

Bei der in Figur 4 dargestellten Frequenzmessanordnung steht ein zeitdiskretes Taktsteuersignal am Ausgang eines durch die Auswerteschaltung 425 angesteuerten Zählers 429 zur Verfügung. Dieses zeitdiskrete Taktsteuersignal ist einem Digital-Analog-Wandler 430 zugeführt, der das analoge Taktsteuersignal S420 bereitstellt. Zur Steuerung des Zählers 429 erzeugt die Ansteuerschaltung 425 zwei Steuersignale 5425_1, S425_2. Das erste Steuersignal S425_1 dient zum Hochzählen bzw. Inkrementieren des Zählers 429, während das zweite Steuersignal S425_2 zum Dekrementieren bzw. Herunterzählen des Zählers 429 dient. Die Ansteuerschaltung 425 ist hierbei dazu ausgebildet, einen zum Hochzählen des Zählers 429 geeigneten Signalpegel des ersten Steuersignals S425_1 zu erzeugen, wenn das Verhältnis aus Taktfrequenz $f_{CLK}$ zu Brummfrequenz $f_B$ bzw. das Verhältnis aus der Periodendauer $T_B$ des Brummsignals und der Periodendauer $T_{CLK}$ des Taktsignals kleiner als ein vorgegebener Grenzwert ist. In diesem Fall wird der Zähler 429 hochgezählt, um über das Taktsteuersignal S420 die Taktfrequenz des Taktsignals CLK zu erhöhen. Entsprechend ist die Auswerteschaltung 425 dazu ausgebildet, einen zum Dekrementieren des Zählers 429 geeigneten Signalpegel des zweiten Steuersignals S425_2 zu erzeugen, wenn das Verhältnis aus der Frequenz $f_{CLK}$ des Taktsignals und der Frequenz $f_B$ des Brummsignals bzw. aus der Periodendauer $T_B$ des Brummsignals und der Periodendauer $T_{CLK}$ des Taktsignals größer ist als ein vorgegebener zweiter Grenzwert.

Das Inkrementieren und Dekrementieren des Zählers kann in jeweils gleichen Schritten erfolgen. Darüber hinaus besteht auch die Möglichkeit, den Wert, um den der Zähler 429 jeweils inkrementiert oder dekrementiert wird, abhängig davon einzustellen, wie stark das Verhältnis von Taktfrequenz $f_{CLK}$ zu Brummfrequenz $f_B$ von einem gewünschten Wertebereich abweicht. Die Funktionsweise der Auswerteschaltung 425 und des Zählers 429 zur Erzeugung des Taktsteuersignals S420 kann wie folgt kurz zusammengefasst werden:

$$\text{Inkrementiere Zähler 420, wenn } f_{CLK}/f_B < S1 \qquad (2)$$

$$\text{Dekrementiere Zähler 420, wenn } f_{CLK}/f_B > S2 \qquad (3).$$

S1 und S2 bezeichnen hierbei Grenzwerte eines Wertebereiches, innerhalb dessen das Verhältnis aus Taktfrequenz zu Brummfrequenz liegen soll. Die Taktfrequenz $f_{CLK}$ wird über das Taktsteuersignal S420 hierbei solange angepasst, bis diese Bedingung erfüllt ist.

Optional ist bei der in Figur 4 dargestellten Frequenzmessanordnung eine Freigabeschaltung 426, 427, 428 vorhanden, die ein Inkrementieren und Dekrementieren des Zählers 429, und damit eine Änderung des Taktsteuersignals S420 nur dann zulässt, wenn die Amplitude des bandpassgefilterten Fehlersignals bzw. Brummsignals S43[k] größer ist als ein vorgegebener Amplitudenschwellenwert. Die Freigabeschaltung umfasst hierzu eine Spitzenwertgleichrichter- und Vergleicheranordnung 426, die den Spitzenwert des Brummsignals mit dem vorgegebenen Schwellenwert vergleicht und die ein Freigabesignal S426 nur dann erzeugt, wenn dieser Spitzenwert oberhalb des Amplitudenschwellenwerts liegt. Die Freigabeschaltung umfasst in dem dargestellten Beispiel zudem als UND-Gatter ausgebildete Logik-Gatter 427, 428, die den Inkrementier- und Dekrementier-Eingängen des Zählers 429 vorgeschaltet sind und denen das Freigabesignal S426 und die ersten und zweiten Steuersignals S425_1, S425_2 zugeführt sind. Die Steuersignale 5425_1, S425_2 passieren bei dieser Freigabeschaltung die Logik-Gatter 427, 428 nur dann, um den Zähler 429 zu inkrementieren oder zu dekrementieren, wenn das Freigabesignal S426 einen Freigabepegel, im vorliegenden einen High-Pegel, annimmt. Der Zweck der Freigabeschaltung 426 besteht darin, eine Adaption der Filtereigenschaften über die Taktfrequenz $f_{CLK}$ des Abtasttakts nur dann zu ermöglichen, wenn ein Brummsignal mit einer ausreichend hohen Amplitude vorliegt. Dem liegt die Überlegung zugrunde, dass bei kleiner Leistungsaufnahme einer an den Ausgang angeschlossenen Last und einem damit verbundenen Brummsignal kleiner Amplitude die Gefahr einer fehlerhaften Frequenzmessung des Brummsignals besteht, woraus eine Fehlanpassung der Filteranordnung resultieren könnte. Darüber hinaus wirkt sich ein Brummsignal kleiner Amplitude nur wenig auf die Regelung der Leistungsaufnahme aus, so dass auf eine exakte Ausfilterung eines solchen Brummsignals kleiner Amplitude verzichtet werden kann.

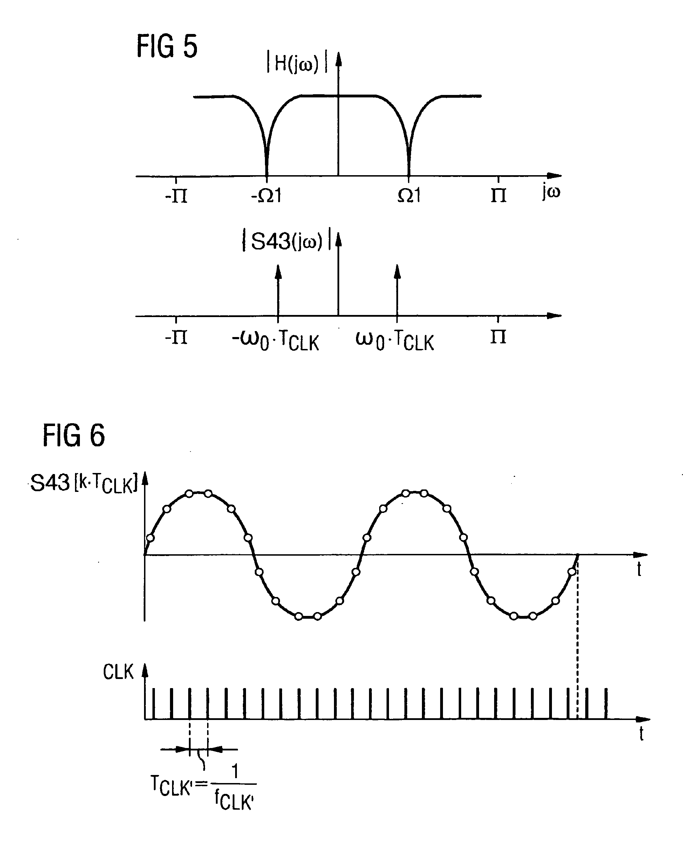

Die Funktionsweise der in Figur 4 dargestellten Filteranordnung wird anschaulich anhand von Figur 5, in der beispielhaft die normierte Übertragungsfunktion eines Bandsperrfilters und das Frequenzspektrum des abgetasteten Brummsignals S43[k] dargestellt ist, wobei zu Zwecken der Erläuterung davon ausgegangen wird, dass das Brummsignal ein Kosinussignal mit einer Kreisfrequenz $\omega_0$, mit $\omega_0 = 2\pi \cdot f_0$, ist, wobei $f_0$ die Brummfrequenz ist. Zu Zwecken der Erläuterung sei angenommen, dass das Bandsperrfilter 421 Bandsperrbereiche mit normierten Mittenfrequenzen $\Omega1$ und $-\Omega1$ besitzt. Signalanteile des abgetasteten Brummsignals liegen im Frequenzspektrum bei normierten Frequenzen von $-\omega_0 \cdot T_{CLK}$ und $\omega_0 \cdot T_{CLK}$. Wie anhand des Frequenzspektrums des Brummsignals S43[k] in Bezug auf das Übertragungsverhalten des Bandsperrfilters unmittelbar ersichtlich ist, lassen sich die Spektralanteile ungleich Null des Brummsignals durch Anpassen der Taktfrequenz $f_{CLK}$ bzw. der Taktperiode $T_{CLK}$ in die Sperrbereiche des Bandsperrfilters verschieben, selbstverständlich vorausgesetzt, dass das Nyquist-Kriterium erfüllt ist, gemäß dem die Abtastfrequenz wenigstens doppelt so hoch sein muss, wie die Frequenz des abgetasteten Signals. Das heißt im vorliegenden Fall:

$$f_{CLK} \geq 2 \cdot f_0 \qquad (4).$$

Die Funktionsweise der Auswerteschaltung 425 wird nachfolgend anhand von Figur 6 erläutert. Dargestellt ist in Figur 6 der zeitliche Verlauf des mit der Taktfrequenz $f_{CLK}$ abgetasteten Brummsignals sowie der zeitliche Verlauf des Taktsignals CLK. Für diese Erläuterung wird davon ausgegangen, dass das der Auswerteschaltung 425 zugeführte Taktsignal CLK' dem zur Abtastung der Analogsignale verwendeten Taktsignal CLK entspricht. Die Auswerteschaltung 425 ermittelt die Anzahl der Taktperioden des Taktsignals CLK innerhalb einer vorgegebenen Anzahl von Perioden des Brummsignals, in dem Beispiel innerhalb von zwei Perioden des Brummsignals. Die Anzahl der Taktperioden des Taktsignals, die innerhalb der vorgegebenen Anzahl von Perioden des Brummsignals liegen, liefert unmittelbar ein Maß für das Verhältnis von Taktfrequenz $f_{CLK}$ zu Brummfrequenz $f_B$ und kann unmittelbar für die Erzeugung der Steuersignale 5425_1, S425_2 zum Inkrementieren bzw. Dekrementieren des Zählers 429 verwendet werden. Liegt diese Anzahl von Taktperioden unterhalb eines vorgegebenen Grenzwertes, so liegt das Verhältnis von Taktfrequenz $f_{CLK}$ zu Brummfrequenz $f_B$ unterhalb des ersten Grenzwertes und die Taktfrequenz ist zu erhöhen. Liegt diese Anzahl oberhalb eines weiteren vorgegebenen Schwellenwertes, so liegt das Verhältnis von Taktfrequenz $F_{CLK}$ zu Brummfrequenz $f_B$ oberhalb des zweiten Grenzwertes und die Taktfrequenz $F_{CLK}$ ist entsprechend zu verringern.

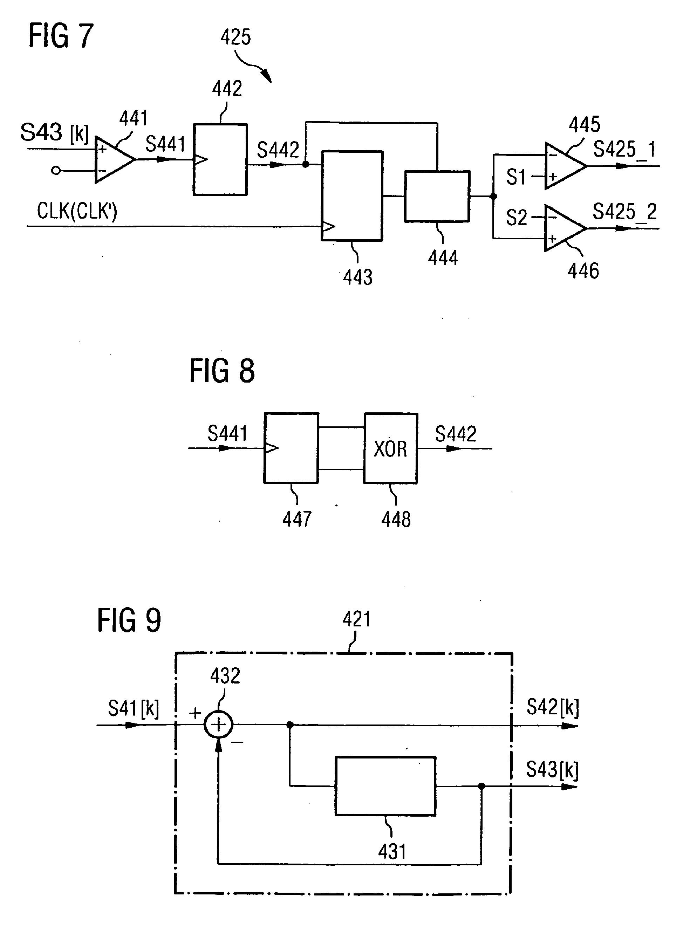

Ein Realisierungsbeispiel einer Auswerteschaltung 425 ist in Figur 7 dargestellt. Diese Auswerteschaltung weist einen Vergleicher 441 auf, dem das abgetastete Brummsignal S43[k] zugeführt ist und das zur Detektion eines Pegelwechsels des Brummsignals dient. Die einzelnen Abtastwerte des mittelwertfreien Brummsignals werden hierzu mit Null verglichen, um einen Pegelwechsel des Brummsignals zu detektieren. Ein Ausgangssignal S441 dieses Vergleichers 441 ist einem Flipflop 442 zugeführt, das jeweils dann seinen Zustand ändert, wenn das Vergleichssignal S441 von einem Low-Pegel auf einen High-Pegel ansteigt, also mit jeder neuen Periode des Brummsignals. Diesem "Toggle"-Flipflop 442 ist ein Zähler 443 nachgeschaltet, dessen Takteingang das Taktsignal CLK oder das zweite Taktsignal CLK' zugeführt ist und der durch ein Ausgangssignal S442 des Toggle-Flipflops freigegeben wird. Dieser Zähler wird bei der dargestellten Anordnung zu Beginn jeder zweiten Periode des Brummsignals freigegeben und zählt während der Periode des Brummsignals die Taktimpulse des Taktsignals CLK bzw. des zweiten Taktsignals CLK'. Dem Zähler ist ein Register 444 nachgeschaltet, das am Ende einer jeden Auswerteperiode, d. h. bei einer fallenden Flanke des Flipflop-Signals S442 den an einem Ausgang des Zählers 443 zur Verfügung stehenden Zählerwert speichert. Der in dem Register 444 gespeicherte Zählerwert, der unmittelbar ein Maß für das Verhältnis von Taktfrequenz zu Brummfrequenz darstellt, wird mittels zweier dem Register 444 nachgeschalteter Vergleicher 445, 446 mit ersten und zweiten Schwellenwerten S1, S2 verglichen. An den Ausgängen der Vergleicher 445, 446 stehen die Steuersignale S425_1, S425_2 zur Verfügung. Das erste Steuersignal S425_1, das Bezug nehmend auf Figur 4 den Zähler inkrementiert, nimmt einen High-Pegel an, wenn die während der Auswerteperiode ermittelte Anzahl von Taktimpulsen kleiner ist als ein erster Schwellenwert S1. Das zweite Taktsignal S425_2, das Bezug nehmend auf Figur 4 den Zähler dekrementiert, nimmt einen High-Pegel an, wenn die Anzahl der innerhalb der Auswerteperiode ermittelten Taktimpulse größer ist als ein zweiter Schwellenwert S2.

Eine Auswertung der Anzahl der Taktimpulse über mehrere Perioden des Brummsignals ist möglich, wenn das Flipflop 442 durch einen Zähler ersetzt wird, dessen Takteingang das Vergleichssignal S441 zugeführt ist und der den nachgeschalteten Zähler 443 freigibt. Eine Auswertung über zwei Ansteuerperioden des Brummsignals lässt sich beispielsweise mittels eines 2-Bit-Zählers erreichen, dessen Bits durch ein XOR-Gatter verknüpft, das Freigabesignal S442 bilden. Bei dieser Anordnung ist der Zähler 443 jeweils dann freigegeben, wenn der Zählerstand des vorgeschalteten Zählers 1 oder 2 beträgt. Eine derartige Zähleranordnung als Ersatz für das Flipflop 442 ist in Figur 8 dargestellt, in der das Bezugszeichen 447 den Zähler und das Bezugszeichen 448 das nachgeschaltete XOR-Gatter bezeichnet.

Bei der in Figur 4 dargestellten Filteranordnung 42 sind ein Bandsperrfilter zur Erzeugung des bandsperrgefilterten Fehlersignals S42[k] und ein Bandpassfilter 431 zur Erzeugung des bandpassgefilterten Fehlersignals S43[k] vorhanden. Die Funktionalität des Bandsperrfilters 421 und des Bandpassfilters 431, die zueinander komplementäre Übertragungsfunktionen besitzen, kann auf einfache Weise unter Verwendung eines einzigen Bandpassfilters erreicht werden, wie nachfolgend anhand von Figur 9 erläutert wird.

Das Bandpassfilter 431 ist bei dieser Ausführungsform Teil des Bandsperrfilters 421, das das bandsperrgefilterte Fehlersignal S42[k] bereitstellt. Das Bandsperrfilter 421 weist bei diesem Ausführungsbeispiel außerdem einen Subtrahierer 432 auf, dem das Fehlersignal S41[k] und ein am Ausgang des Bandpassfilters 431 zur Verfügung stehendes bandpassgefilterte Signal S43[k] als Eingangssignale zugeführt sind. Das Ausgangssignal des Subtrahierers 432 bildet das bandsperrgefilterte Fehlersignal S42[k] und ist außerdem dem Eingang des Bandpassfilters 431 zugeführt, das in diesem Ausführungsbeispiel bei seiner Resonanzfrequenz eine hohe Verstärkung aufweist. Im Idealfall ist die Verstärkung des Bandpassfilters bei seiner Resonanzfrequenz unendlich und hängt bei einer digitalen Realisierung von Rundungsfehlern der dabei verwendeten Rechenwerke ab.

Weist das Filtereingangssignal S41[k] Frequenzanteile bei der Resonanzfrequenz des Bandpassfilters 431 auf, so stellt sich bedingt durch die hohe Verstärkung des Bandpassfilters 431 an dessen Ausgang ein Signalpegel ein, der in etwa dem Signalpegel des die Resonanzfrequenz aufweisenden Signalanteils in dem Eingangssignal S41[k] entspricht, der jedoch ein umgekehrtes Vorzeichen bzw. eine entgegen gesetzte Phasenlage aufweist, während der Signalpegel dieses Signalanteils in dem bandsperrgefilterten Signal S42[k] deutlich reduziert ist. Die Kombination aus Subtrahierer 432 und Bandpassfilter 431 mit sehr hoher Verstärkung wirkt bei der dargestellten Filteranordnung wie ein Bandsperrfilter mit einem Verstärkungsfaktor von etwa Eins, so dass das am Ausgang des Bandpassfilters 431 anliegende Signal S43[k] einem bandpassgefilterten Fehlersignal entspricht.

Liegt die Frequenz des Eingangssignals S41[k] etwas neben der Resonanzfrequenz des Bandpassfilters, so stellt sich im eingeschwungenen Zustand am Ausgang des Bandpassfilters 431 eine Schwingung ein, deren Amplitude noch weitgehend der Signalamplitude des Eingangssignals S41[k] entspricht und deren Phasenlage etwas von der entgegen gesetzten Phasenlage zum Eingangssignal S41[k] abweicht. Das Eingangssignal des Bandpassfilters 431 bzw. das bandsperrgefilterte Signal S42[k] nimmt in diesem Fall einen höheren Signalpegel an als bei Anregung exakt auf der Resonanzfrequenz. Das Filter weist also bezüglich seines Bandpassverhaltens, das sich auf das bandpassgefilterte Signal S43[k] auswirkt, eine wesentlich breitere Filtercharakteristik auf als bezüglich seines Bandsperrverhaltens, das sich auf das Bandsperrsignal S42[k] auswirkt. Dadurch steht, wie zuvor beschrieben, auch dann ein Signal genügend hoher Amplitude für die Frequenzeinstellung an dem Bandpassausgang S43[k] zur Verfügung, wenn das Filter noch nicht exakt auf die Brummfrequenz abgestimmt ist.

**EP 1 956 701 B1**

**Patentansprüche**

1.  Schaltwandler, der aufweist:

    ein induktives Energiespeicherelement (10),
    eine an das induktive Energiespeicherelement (10) angeschlossene Gleichrichteranordnung (20) mit Ausgangsklemmen (103, 104) zur Bereitstellung einer Ausgangsspannung (Vout)
    eine Schaltanordnung (30) zur Regelung einer Stromaufnahme des induktiven Energiespeicherelements (10) abhängig von einem Regelsignal (S40),
    eine Regleranordnung (40), die dazu ausgebildet ist, das Regelsignal (S40) abhängig von der Ausgangsspannung (Vout) zu erzeugen und die aufweist: ein zeitdiskretes Bandsperrfilters (421), dem ein von der Ausgangsspannung (vout) abhängiges, nach Maßgabe eines Taktsignals abgetastetes Fehlersignal (S41[k]) und das Taktsignal (CLK) zugeführt sind und das ein erstes Filtersignal (S42) erzeugt, von dem das Regelsignal (S40) abhängig ist,

    **dadurch gekennzeichnet, dass** die Regleranordnung weiterhin aufweist:

    einen steuerbaren oszillator (424), dem ein Taktsteuersignal (S430) zugeführt ist und der das Taktsignal (CLK) abhängig von dem Taktsteuersignal (S430) erzeugt,
    eine Frequenzmessanordnung (420), der das Fehlersignal (S41) zugeführt ist und die dazu ausgebildet ist, eine Frequenz eines periodischen Signalanteils des Fehlersignals (S41) zu ermitteln und das Taktsteuersignal (S430) abhängig von dieser Frequenz zu erzeugen und die aufweist:

    eine Auswerteschaltung (425), der das abgetastete Fehlersignal (S41[k]) oder ein von diesem Signal abgängiges Signal (S43[k]) und das Taktsignal (CLK) oder ein von dem Taktsignal (CLK) abhängiges zweites Taktsignal (CLK') zugeführt sind und die dazu ausgebildet ist, ein Verhältnis zwischen einer Periodendauer eines periodischen Signalanteils des Fehlersignals (S41[k]) und einer Periodendauer des Taktsignals (CLK) zu ermitteln und abhängig von dem Verhältnis zwischen der Periodendauer des periodischen Signalanteils des Fehlersignals (S41 [k]) und der Periodendauer des Taktsignals (CLK) wenigstens ein Steuersignal (S425_1, S425_2) zu erzeugen,
    eine Taktsteuersignalerzeugungsschaltung (429, 430) der das wenigstens eine Steuersignal (S425_1, S425_2) zugeführt ist, und die das Taktsteuersignal (S420) abhängig von dem wenigstens einen Steuersignal (S425_1, S425_2) bereitstellt.

2.  Schaltwandler nach Anspruch 1, bei dem die Regleranordnung (40) einen Regler (43) aufweist, dem das erste Filtersignal (S42) zugeführt ist und der das Regelsignal (S40) bereitstellt.

3.  Schaltwandler nach Anspruch 2, bei dem der Regler ein Proportionalregler oder ein Proportional-Integral-Regler ist.

4.  Schaltwandler nach einem der vorangehenden Ansprüche, bei dem die Frequenzmessanordnung ein Bandpassfilter (431) aufweist, dem das abgetastete Fehlersignal (S41[k]) oder das erste Filtersignal (S42[k]) zugeführt ist und das ein zweites Filtersignal (S43 [k]) bereitstellt, und bei dem der Auswerteschaltung (425) das zweite Filtersignal (S43 [k]) zugeführt ist.

5.  Schaltwandler nach einem der vorangehenden Ansprüche, bei dem die Taktsteuersignalerzeugungsschaltung (429) als Zähler ausgebildet ist, der durch das wenigstens eine Steuersignal (S425_1, S425_2) inkrementierbar und dekrementierbar ist.

6.  Schaltwandler nach Anspruch 5, bei dem die Frequenzmessanordnung eine Freigabeschaltung (426, 427, 428) aufweist, die die Taktsteuersignalerzeugungsschaltung (429) abhängig von einer Signalamplitude des zweiten Filtersignal (S43[k]) freigibt oder sperrt.

7.  Schaltwandler nach einem der vorangehenden Ansprüche, bei dem das Bandsperrfilter aufweist:

    einen Eingang zum Zuführen des abgetasteten Fehlersignals (S41[k]) und einen Ausgang zum Bereitstellen des ersten Filtersignals (S42[k]),
    einen dem Eingang nachgeschalteten Subtrahierer (432), dem das Fehlersignal (S41[k]) und ein Rückkopp-lungssignal zugeführt sind,

9

**EP 1 956 701 B1**

einen Rückkopplungszweig mit einem Eingang, der an den Ausgang des Bandsperrfilters (421) angeschlossen ist, mit einem Bandpassfilter (431) und mit einem Ausgang, an dem das Rückkopplungssignal zur Verfügung steht.

**8.** Schaltwandler nach Anspruch 7, bei der das Bandpassfilter (431) eine Resonanzfrequenz und eine Verstärkung wesentlich größer als Eins bei der Resonanzfrequenz aufweist.

**9.** Schaltwandler nach Anspruch 7 oder 8, bei dem das Rückkopplungssignal des Bandsperrfilters als zweites Filtersignal (S43[k]) der Frequenzmessanordnung dient.

**Claims**

**1.** Switch-mode converter which has:

an inductive energy storage element (10),
a rectifier arrangement (20), connected to the inductive energy storage element (10), with output terminals (103, 104) for providing an output voltage (Vout),
a switching arrangement (30) for regulating a current draw by the inductive energy storage element (10) on the basis of a control signal (S40),
a controller arrangement (40) which is designed to generate the control signal (S40) on the basis of the output voltage (Vout) and which has: a discrete-time band rejection filter (421) which is supplied with an error signal (S41[k]), which is dependent on the output voltage (Vout) and which is sampled in accordance with a clock signal, and with the clock signal (CLK) and which generates a first filter signal (S42) on which the control signal (S40) is dependent,
**characterized in that** the controller arrangement furthermore has:

a controllable oscillator (424) which is supplied with a clock control signal (S430) and which generates the clock signal (CLK) on the basis of the clock control signal (S430),
a frequency measuring arrangement (420) which is supplied with the error signal (S41) and which is designed to ascertain a frequency for a periodic signal component of the error signal (S41) and to generate a clock control signal (S430) which is dependent on this frequency and which has:

an evaluation circuit (425), which is supplied with the sampled error signal (S41[k]) or with a signal (S43[k]) which is dependent on this signal and with the clock signal (CLK) or with a second clock signal (CLK') which is dependent on the clock signal (CLK), and which is designed to ascertain a ratio between a period duration for a periodic signal component of the error signal (S41 [k]) and a period duration for the clock signal (CLK), and to generate at least one control signal (S425_1, S425_2) on the basis of the ratio between the period duration of the periodic signal component of the error signal (S41[k]) and the period duration of the clock signal (CLK),
a clock control signal generation circuit (429, 430) which is supplied with the at least one control signal (S425_1, S425_2) and which provides the clock control signal (S420) on the basis of the at least one control signal (S425_1, S425_2).

**2.** Switch-mode converter according to Claim 1, in which the controller arrangement (40) has a controller (43) which is supplied with the first filter signal (S42) and which provides the control signal (S40).

**3.** Switch-mode converter according to Claim 2, in which the controller is a proportional controller or a proportional-integral controller.

**4.** Switch-mode converter according to one of the preceding claims, in which the frequency measuring arrangement has a bandpass filter (431) which is supplied with the sampled error signal (S41[k]) or with the first filter signal (S42[k]) and which provides a second filter signal (S43[k]), and in which the evaluation signal (425) is supplied with the second filter signal (S43[k]).

**5.** Switch-mode converter according to one of the preceding claims, in which the clock control signal generation circuit (429) is in the form of a counter which can be incremented and decremented by the at least one control signal (S425_1, S425_2).

**10**

6.  Switch-mode converter according to Claim 5, in which the frequency measuring arrangement has an enable circuit (426, 427, 428) which enables or disables the clock control signal generation circuit (429) on the basis of a signal amplitude of the second filter signal (S43[k]).

7.  Switch-mode converter according to one of the preceding claims, in which the band rejection filter has:

    an input for supplying the sampled error signal (S41[k]) and an output for providing the first filter signal (S42[k]), a subtractor (432) which is connected downstream of the input and which is supplied with the error signal (S41[k]) and with a feedback signal,
    a feedback path having an input which is connected to the output of the band rejection filter (421), having a bandpass filter (431) and having an output which provides the feedback signal.

8.  Switch-mode converter according to Claim 7, in which the bandpass filter (431) has a resonant frequency and a gain much greater than unity at the resonant frequency.

9.  Switch-mode converter according to Claim 7 or 8, in which the feedback signal from the band rejection filter is used as second filter signal (S43[k]) for the frequency measuring arrangement.

**Revendications**

1.  Convertisseur, qui comporte :

    un élément (10) inductif accumulateur d'énergie,
    un montage (20) redresseur de courant, relié à l'élément (10) inductif accumulateur d'énergie et ayant des bornes (103, 104) de sortie, pour mettre à disposition une tension (Vout) de sortie
    un montage (30) pour la régulation d'une absorption de courant de l'élément (10) inductif accumulateur d'énergie en fonction d'un signal (S40) de régulation,
    un agencement (40) de régulateur, qui est constitué pour produire le signal (S40) de régulation en fonction de la tension (Vout) de sortie et qui comporte : un filtre (421) d'arrêt à bande passante et discret dans le temps, auquel est envoyé un signal (S41) [k] d'erreur qui dépend de la tension (Vout) de sortie et qui est échantillonné à la mesure d'un signal d'horloge, et le signal (CLK) d'horloge et qui produit un premier signal (S42) de filtre, dont dépend le signal (S40) de régulation,

    **caractérisé en ce que** le montage de régulation comporte, en outre :

    un oscillateur (424) qui peut être commandé, auquel un signal (S430) de commande d'horloge peut être envoyé et qui produit le signal (CLK) d'horloge en fonction du signal (S430) de commande d'horloge,
    un montage (420) de mesure de fréquence, auquel le signal (S41) d'erreur est envoyé et qui est constitué pour déterminer une fréquence d'une composante périodique du signal (S41) d'erreur et pour produire le signal (S430) de commande d'horloge en fonction de cette fréquence et qui comporte :

    un circuit (425) d'exploitation, auquel est envoyé le signal (S41[k]) d'erreur échantillonné ou un signal (S43[k]) qui dépend de ce signal et le signal (CLK) d'horloge, ou un deuxième signal (CLK') d'horloge qui dépend du signal (CLK) d'horloge et qui est constitué pour déterminer un rapport entre une période d'une composante périodique du signal (S41 [k]) d'erreur et une période du signal (CLK) d'horloge et pour produire un signal (S425_1, S425-2) de commande en fonction du rapport entre la période de la composante périodique du signal (S41[k]) d'erreur et la période du signal (CLK) d'horloge,
    un circuit (429, 430) de production d'un signal de commande d'horloge, auquel est envoyé le au moins un signal (S425_1, S425_2) de commande et qui procure le signal (S420) de commande d'horloge en fonction du au moins un signal (S425_1, S425_2) de commande.

2.  Convertisseur suivant la revendication 1, dans lequel le montage (40) de régulateur comporte un régulateur (43) auquel est envoyé le premier signal (S42) de filtre et qui procure le signal (S40) de régulation.

3.  Convertisseur suivant la revendication 2, dans lequel le régulateur est un régulateur proportionnel ou est un régulateur proportionnel-intégral.

4. Convertisseur suivant l'une des revendications précédentes, dans lequel le montage de mesure de fréquence comporte un filtre (431) à bande passante, auquel est envoyé le signal (S41 [k]) d'erreur échantillonné ou le premier signal (S42 [k]) de filtre et qui procure un deuxième signal (S43 [k]) de filtre et dans lequel le deuxième signal (S41 [k]) est envoyé au circuit (425) d'exploitation.

5. Convertisseur suivant l'une des revendications précédentes, dans lequel le circuit (429) de production d'un signal de commande d'horloge est constitué sous la forme d'un compteur qui peut être incrémenté ou décrémenté par le au moins un signal (S425_1, S425_2) de commande.

6. Convertisseur suivant la revendication 5, dans lequel le montage de mesure de fréquence comporte un circuit (426, 427, 428) de libération, qui libère ou bloque le circuit (429) de production d'un signal de commande d'horloge en fonction d'une amplitude du deuxième signal (S43 [k]) de filtre.

7. Convertisseur suivant l'une des revendications précédentes, dans lequel le filtre d'arrêt à bande passante comporte :

   une entrée pour l'envoi du signal (S41[k]) d'erreur échantillonné et une sortie pour procurer le premier signal (S42 [k]) de filtre,
   un soustracteur (432) qui est monté en aval de l'entrée et auquel le signal (S41[k]) d'erreur et un signal de réaction sont envoyés,
   une branche de réaction ayant une entrée qui est reliée à la sortie du filtre (421) d'arrêt à bande passante ayant un filtre (431) à bande passante et une sortie à laquelle le signal de réaction est mise à disposition.

8. Convertisseur suivant la revendication 7, dans lequel le filtre (431) à bande passante a une fréquence de résonance et une amplification sensiblement plus grande que un à la fréquence de résonance.

9. Convertisseur suivant l'une des revendications 7 ou 8, dans lequel le signal de réaction du filtre à bande passante sert de deuxième signal (S43[k]) de filtre du montage de mesure de fréquence.

FIG 1

EP 1 956 701 B1

# FIG 2

# FIG 3

# FIG 4

EP 1 956 701 B1

EP 1 956 701 B1

FIG 5

$|H(j\omega)|$

$-\Pi$    $-\Omega 1$    $\Omega 1$    $\Pi$    $j\omega$

$|S43(j\omega)|$

$-\Pi$    $-\omega_0 \cdot T_{CLK}$    $\omega_0 \cdot T_{CLK}$    $\Pi$

FIG 6

$S43[k \cdot T_{CLK}]$

t

CLK

t

$T_{CLK'} = \dfrac{1}{f_{CLK'}}$

16

## FIG 7

S43 [k]  441  S441  442  S442

CLK(CLK')

425

443   444

445  S425_1

S1

S2

446  S425_2

## FIG 8

S441   447   448   S442

XOR

## FIG 9

421

S41 [k]   432   S42[k]

431   S43[k]

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10355670 B4, Feldtkeller
- DE 102004033354 A1, Frank
- US 5502370 A
- US 5565761 A
- US 6140777 A
- DE 2158105 A1

**In der Beschreibung aufgeführte Nicht-Patentliteratur**

- **Prodic et al.** Self Tuning Digital Comb Filter for PFC Applications. *28th Annual Conference of the Industrial Electronics Society 2002 (IECON 02),* 220-225
- **Prodic et al.** Self-Tuning Digitally Controlled Low-Harminic Rectifier Having Fast Dynamic Response. *IEEE Transactions on Power Electronics*